# EUROPÄISCHE PATENTSCHRIFT

(11) **EP 2 845 463 B1**
(45) Veröffentlichungstag und Bekanntmachung des Hinweises auf die Patenterteilung: **07.12.2016**
(21) Anmeldenummer: 14002991.9
(22) Anmeldetag: 29.08.2014
(51) Int. Cl.: A01D 89/00

(54) **Aufnahmevorrichtung für Erntemaschinen**
Gathering device for harvesting machines
Dispositif de ramassage pour moissonneuses

(30) Priorität: 05.09.2013 DE 102013109678
(43) Veröffentlichungstag der Anmeldung: 11.03.2015
(73) Patentinhaber: B. Strautmann & Söhne GmbH u. Co. KG, 49196 Bad Laer (DE)
(72) Erfinder: Kleine-Niesse, Ingo, 49536 Lienen (DE); Kleine Niesse, Richard, 49536 Lienen (DE)
(74) Vertreter: Träger, Denis

(56) Entgegenhaltungen:
- EP-A1- 0 903 077
- EP-A1- 2 384 616

## Beschreibung

Die Erfindung betrifft eine Aufnahmevorrichtung für Erntemaschinen nach dem Oberbegriff des Anspruchs 1.

Aufnahmevorrichtungen der genannten Art werden z.B. an Erntemaschinen wie Ladewagen, Feldhäcksler oder Ballenpressen zur Aufnahme von Viehfutter verwendet. Das von den Aufnahmezinken erfasste, auf dem Boden liegende Erntegut wird angehoben und an der Oberseite der Trommel von einem kammartigen Abstreifer von dieser abgelöst und einer nachgeordneten Vorrichtung, z.B. der Presse eines Ladewagens übergeben. Dabei soll einerseits das Erntegut möglichst sauber und vollständig vom Boden aufgenommen werden. Andererseits sollen die Enden der Aufnahmezinken möglichst wenig mit dem Boden, auf dem das Erntegut liegt, in Kontakt kommen, so dass möglichst wenig Erdreich mit eingezogen sowie die Aufnahmezinken hinsichtlich ihres Verschleißes geschont werden.

Insbesondere bei einer tiefen Einstellung der Aufnahmevorrichtung, dass heißt bei nah an den Boden heranreichenden Enden der Aufnahmevorrichtung in Arbeitsstellung, kann es, beispielsweise auf Grund von Bodenunebenheiten, zu Bodenkontakten kommen. Dabei können die Schenkel der Aufnahmezinken durch Überdehnung des zulässigen Verdrehwinkels und durch schlagartig zurückfedernde, dabei in Vibration geratende Schenkel überbeansprucht werden, was zur Verkürzung der Lebensdauer und dadurch zum Abbrechen der Schenkel führt. Neben Arbeitsausfall und Reparaturen entstehen auch durch in das Futter gelangende abgebrochene Schenkel Gefahren bei der Tierfütterung.

Die Bodenberührungen treten insbesondere bei unebenen Böden auf, wobei dann auch durch Schmutzaufnahme die Futterqualität des zu verfütternden Erntegutes sinkt, was die Tiergesundheit gefährdet.

Bei einer bekannten Aufnahmevorrichtung nach der DE 19740589 A1 ist eine mit einem kammartigen Abstreifer zusammenwirkende Trommel bekannt, bei der nur die Schenkel der Aufnahmezinken aus dem äußeren Mantelkreis der Trommel hervortreten. Der Windungsbereich der Aufnahmezinken und die Befestigungen der Abstreifer sind in offenen U-Schienen, welche in die Trommel eingelassen sind, innerhalb des Mantelkreises untergebracht. Durch die offenen Stirnseiten können Halmteile und Schmutz in das Innere der Trommel gelangen.

Bei der Erntegutaufnahme gelangt in die offenen U-Schienen Halmgut, welches von den kammartigen Abstreifern nicht sauber abgestreift werden kann, sondern von diesen in die oben offene U-Schiene gedrückt wird und sich auch vor den Abstreifern staut. Dies kann es zu Stopf- und Wickelerscheinungen und Schäden an den Bauteilen führen. Gelangt die Trommel auf unebenen Böden in Bodennähe oder berührt sie den Boden, werden die Schenkel der Aufnahmezinken derart nach hinten abgelenkt, dass daraus die bereits genannten Schäden entstehen.

Weiterhin nachteilig ist, dass bei zu tief eingestellter Pick-up-Trommel auch die Abstreifer der bekannten Aufnahmevorrichtungen Kontakt mit dem Boden bekommen können. In diesem Fall weichen die den Boden kontaktierenden Abstreifer zwangsläufig zur Seite des geringsten Widerstandes hin aus. Das seitliche Ausweichen der Abstreifer führt zu einem Kontakt der Abstreifer-Seitenflächen mit den Schenkeln der Aufnahmezinken. Da die Aufnahmezinken auf der im Einsatz rotierenden Trommel angebracht sind, resultiert aus dem reibenden Kontakt der rotierenden Zinken mit den feststehenden Abstreifern Verschleiß sowohl an der den Abstreifer-Seitenflächen als auch an den Schenkeln der Aufnahmezinken. Die durch den Verschleiß dünner werdenden Schenkel verursachen Zinkenbrüche.

Aus EP 2384616 A1 ist eine Aufnahmevorrichtung für einen Erntewagen bekannt, bei dem Aufnahmezinken (Doppelschenkelfedern 13) in Reihen auf einer Trommel 3 angeordnet sind. Die Doppelschenkelfedern sind mittels Haltern 5 auf dem äußeren Umfang der Trommel angebracht, welche von Abstreifelemente umschlungen ist. Die Abstreifelemente sind voneinander beabstandet angeordnet, so dass sich zwischen den Abstreifelementen Spalten ergeben, die von den Schenkel der Doppelschenkelfedern bei Rotation der Trommel durchlaufen werden, Die Abstreifelemente leiten so zwar den größten Teil des aufgenommenen Ernteguts weiter, können jedoch ein Eindringen von Erntegut in den Bereich zwischen der Trommel und den Abstreifelementen nicht vollständig verhindern.

Weiterhin ist aus DE 10 2007 017 911 A1 eine landwirtschaftliche Erntevorrichtung mit einer Aufnahmevorrichtung bei der Förderzinken 7 vorgesehen sind, die mittels Formstücken 14 oder Halteblechen 17 auf die Oberfläche einer Trommel 9 angebracht sind. Die Förderzinken 7 sowie die Formstücke 14 bzw. Haltebleche 17 überragen die Trommeloberfläche, so dass die Gefahr besteht, dass sich in diesen Bereichen unerwünscht Material ansammelt, welches von den zur Weiterleitung des aufgenommenen Ernteguts vorgesehenen Abstreifern nicht weggeleitet werden kann.

Die Aufgabe der Erfindung ist es, eine neuartige Aufnahmevorrichtung zu konzipieren, bei der unerwünschte Materialansammlungen im Befestigungsbereich der Aufnahmezinken vermieden und so Ausfallzeiten reduziert und die Lebensdauer der Bauteile erhöht wird.
- Diese Aufgabe wird gelöst durch eine Aufnahmevorrichtung nach dem Oberbegriff des Anspruches 1, bei der jeweils eine Tasche einen Aufnahmezinken aufnimmt.

Die Taschen sind in mehreren Reihen auf der Mantelfläche in gleichmäßigen Winkelabständen verteilt angeordnet. Bei den Taschen handelt es sich um vorzugsweise aus Metallblech hergestellte, trogartige Gebilde mit einem Boden und vollständig geschlossenen Seitenflächen, welche in entsprechend angeordnete Aussparungen der Trommel-Mantelfläche eingesetzt und mit dieser fest verbunden sind. Die Verbindung von Mantelfläche und Taschen wird vorzugsweise hergestellt, indem die Bauteile miteinander verschweißt werden. Die Taschen der verschiedenen Reihen sind so angeordnet, dass sie hintereinander angeordnet auf einem Umfangskreis liegen.

In das Innere der Tasche werden die Aufnahmezinken, bei denen es sich beispielsweise um an sich bekannte Doppelschenkelspiralfedern oder um andere, vorrangig U-förmige, Aufnahmezinken handeln kann, angeordnet. Bis auf eine ggf. für die Anbringung der Aufnahmenzinken vorgesehene Öffnung oder Bohrung ist die Aufnahmetasche gegenüber der Trommel komplett geschlossen, so dass weder Schmutzpartikel noch Erntegut in das Innere der Trommel eindringen kann.

Da die Aufnahmezinken in Taschen an der Trommel angebracht sind und die Trommel staubdicht verschlossen ist, kann auf die Anbringung von die Trommel umgreifenden Abstreifern, wie sie aus dem Stand der Technik allgemein bekannt und üblich sind, verzichtet werden. Die Abstreiffunktion und damit die Übergabe des aufgenommenen Erntegutes an die nachgeordnete Vorrichtung, z.B. die Presse eines Ladewagens, kann vielmehr von stummelartigen Abstreifern übernommen werden, welche oberhalb der Trommel angeordnet sind und lediglich den unmittelbaren Übergabebereich abdecken. Im Gegensatz zur rotierenden Trommel sind die Abstreifer feststehend. Sie sind so angebracht, dass sie kammartig zwischen die Aufnahmezinken greifen und bis dich an die Mantelfläche der Trommel heranreichen. Die Abstreifer sind vorzugsweise so kurz, dass bei Bodenkontakt der Trommel die Abstreifer selbst nicht mit dem Boden in Kontakt geraten. Somit ist ein seitliches Ausweichen der Abstreifer durch Bodenkontakt und daraus resultierender Verschleiß an den Aufnahmezinken ausgeschlossen.

Vorgesehen ist, dass jeweils eine Aufnahmetasche jeweils einen Aufnahmezinken aufnimmt. Die Taschen können so an die Aufnahmezinken bzw. an deren Befestigungselemente angepasst werden. Hierdurch werden die nicht von den Aufnahmezinken, bzw. von den Befestigungselementen der Aufnahmezinken, ausgefüllten Freiräume der Taschen reduziert. Die Bereiche, in denen sich Schmutzpartikel ablagern können, sind somit minimiert.

In einer weiteren Ausführungsform sind die Taschen in mehreren Reihen geradlinig angeordnet. Analog zu bekannten Aufnahmevorrichtungen mit auf Zinkenträgern angebrachten Aufnahmezinken überstreichen bei dieser Ausführungsform die in einer Reihe benachbarten Aufnahmezinken den Boden kammartig gemeinsam und heben das Erntegut an.

In einer weiteren bevorzugten Ausführungsform sind die Taschen in mehreren spiralförmigen Reihen in der Mantelfläche angeordnet. Die spiralförmige Anordnung kann so ausgelegt sein, dass nicht gleichzeitig viele Aufnahmezinken in Eingriff mit dem Erntegut geraten, sondern jeweils nur wenige, im Extremfall jeweils nur ein Zinken diesen Eingriff vornimmt. So könnte bei einer Trommel mit insgesamt 60 Aufnahmezinken, bei der jeweils sechs Aufnahmezinken hintereinander und gleichzeitig zehn nebeneinander angeordneten sind, die Position der Taschen so ausgelegt sein, dass, von der Seite her gesehen, jeweils ein Zinken analog zu einer Uhr mit Minutenanzeiger, in jeweils eine Minutenrichtung weist.

Von besonderem Vorteil ist eine Ausführungsform, bei der die Aufnahmezinken von außen montierbar bzw. demontierbar sind. Der Ersatz von verschlissenen Aufnahmezinken kann so ohne weitere Demontage der Trommel auf einfache Art und Weise erfolgen.

Weiterhin von Vorteil ist es, wenn die Aufnahmetrommel eine allseits geschlossene, staub- und schmutzdichte Einheit bildet. So wird das Eindringen von Schmutz nicht nur an den Verbindungsstellen von Aufnahmetrommel und Taschen, sondern an der gesamten Trommel, insbesondere auch im Bereich der seitlichen Flanschflächen verhindert.

In einer weiteren bevorzugten Ausführungsform ist zwischen den Umlaufbahnen der Taschen mindestens ein ringförmiger Bodenabstandshalter angeordnet, der die Trommel umschlingt. Die ringförmigen Bodenabstandshalter sind zwischen den Umfangskreisen benachbarter Aufnahmetaschen angeordnet und je nach Breite der Aufnahmevorrichtung und den Bodenverhältnissen ein- oder mehrmals pro Trommel angebracht. Der Durchmesser des ringförmigen Bodenabstandshalters ist größer als der Durchmesser der Trommel, so dass diese überragt wird. Bei Bodenunebenheiten setzt somit nicht die Trommel unmittelbar auf der Bodenunebenheit auf, sondern der Abstandshalter. Dabei ist der Abstand zwischen Trommelmantelfläche und dem Außendurchmesser des Boden-Abstandshalters so dimensioniert, dass Anschlagen der der Bodenunebenheit folgenden Schenkel der Aufnahmezinken an die Trommelmantelfläche verhindert wird. Selbst bei ausgeprägten Bodenunebenheiten verbleibt somit für die Aufnahmefeder-Schenkel ein Freiraum, der die Gefahr dauerhafter Verformungen und Beschädigungen der durch die Bodenunebenheit gewaltsam verformten Aufnahmeschenkel reduziert und die Aufnahmezinken damit vor Überbeanspruchung zu schützt.

Von Vorteil ist es weiterhin, wenn nur die Schenkel der Aufnahmezinken über den äußeren Durchmesser der Trommel hervorragen. Hierdurch wird der Fluss des Erntegutes strömungstechnisch günstig gestaltet, da die in den Taschen und damit innerhalb des Trommel-Umfangkreises angeordneten Befestigungselemente den Fluss des Erntegutes nicht behindern.

In einer weiteren bevorzugten Ausführungsform füllen die in den Taschen angeordneten, die Aufnahmezinken befestigenden Bauteile, die Taschen weitgehendst aus und bilden mit dem Durchmesser (D) der Trommel eine Umfangslinie. Hierzu werden bevorzugt spezielle Formstücke eingesetzt, welche derart ausgeführt sind, dass sie jeweils mit ihrer Oberfläche dem Umfangskreis der Mantelfläche angepasst sind und den Aufnahmezinken überdecken, wobei lediglich die Schenkel der Aufnahmezinken aus der Trommel hervortreten. Hierbei kann das Formstück aus elastischem Material, beispielsweise als Spritzgussteil, hergestellt sein. Es ist aber auch möglich, dass die Formstücke aus Metall hergestellt sind, wobei letztere Ausführung, vorzugsweise bei Aufnahmezinken, die als Doppelschenkelspiralfederzinken ausgelegt sind, Verwendung findet. Durch die mittels der Formstücke erzeugte glatte Oberfläche der Trommel ist der kammartige Abstreifer in der Lage, das Erntegut störungsfrei von der Trommel abzuheben.

Von Vorteil ist es weiterhin, wenn die Tasche einen Aufnahmezinken aufnimmt, der als Doppelschenkelfeder ausgeführt ist. Bei der Doppelschenkelfeder kann es sich sowohl um eine Doppelschenkelspiralfeder als auch um eine U-förmige Doppelschenkelfeder ohne eine die Schenkel verbindende Spiralwindung handeln.

Die beiden Schenkelenden der Aufnahmezinken geraten in aller Regel gemeinsam in Eingriff und übertragen so die Last gleichmäßig auf das in der Regel zwischen den Schenkeln angeordnete Befestigungselement der Aufnahmezinken.

Die Erfindung wird nachstehend als Beispiel beschrieben und in den Zeichnungen dargestellt.
- Fig. 1: zeigt eine Aufnahmetrommel mit Anordnung der Taschen, der Abstreifer und Bodenabstandsringe in perspektivischer Ansicht;
- Fig. 2: zeigt eine Teil-Draufsicht auf die Aufsammeltrommel;
- Fig. 3: zeigt eine Schnittansicht nach Fig. 2 Schnitt A-A;
- Fig. 4a: zeigt eine Ausführungsform einer Tasche 3;
- Fig. 4b: zeigt eine weitere Ausführungsform einer Tasche 38;
- Fig 5: zeigt eine Draufsicht auf einen in eine Tasche 3 montierten U-förmigen Aufnahmezinken (ohne Windungsspirale);
- Fig. 6a: zeigt einen Schnitt durch die mit Formstück und U-förmigem Aufnahmezinken (ohne Windungsspirale) besetzte Tasche 3, nach Fig. 5, Schnitt B-B;
- Fig. 6b: zeigt eine Tasche 38 zur Aufnahme eines als Doppelschenkelfeder (mit Windungsspirale) ausgebildeten Aufnahmezinkens als Schnittdarstellung in Seitenansicht (Schnitt CC nach Fig. 8);
- Fig. 7: zeigt die Tasche 38 mit einem als Doppelschenkelfeder (mit Windungsspirale) ausgebildeten Aufnahmezinken in Seitenansicht
- Fig. 8: zeigt die Baugruppe aus Fig. 7 in einer Vorderansicht;

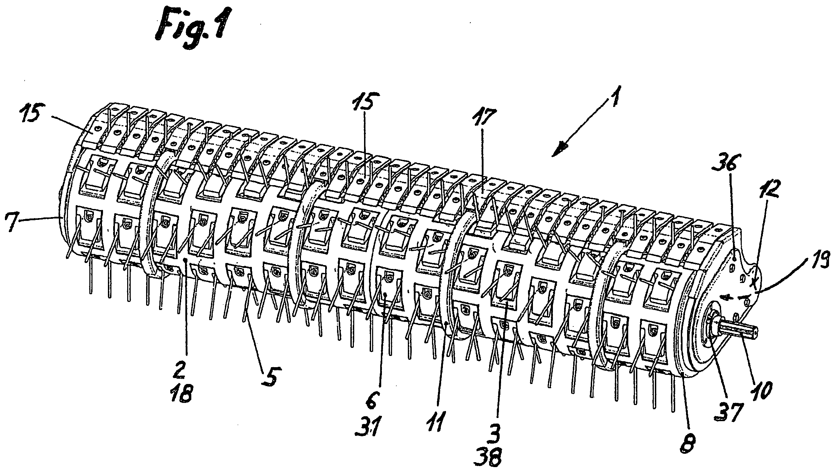

Figur 1 zeigt eine Aufnahmevorrichtung 1, die in bekannter Weise an einer nicht näher dargestellten Erntemaschine angebracht ist. Sie besteht im Wesentlichen aus einer mit eingelassenen Taschen 3 zur Aufnahme je eines Aufnahmezinkens 4 und eines Formstücks 6 versehenen Trommel 2, welche geschlossene Stirnseiten 7 und 8 besitzt, aus denen ein Lager- und ein Antriebszapfen 9 und 10 hervorragen. Die Trommel 2 umschließt einen geschlossenen Innenraum 19. Mindestens ein Bodenabstandshalter 11 ist, die Trommel 2 umschlingend, fest an dieser zwischen zwei Umlaufbahnen 20 hintereinander angeordneter Taschen 3 angebracht.

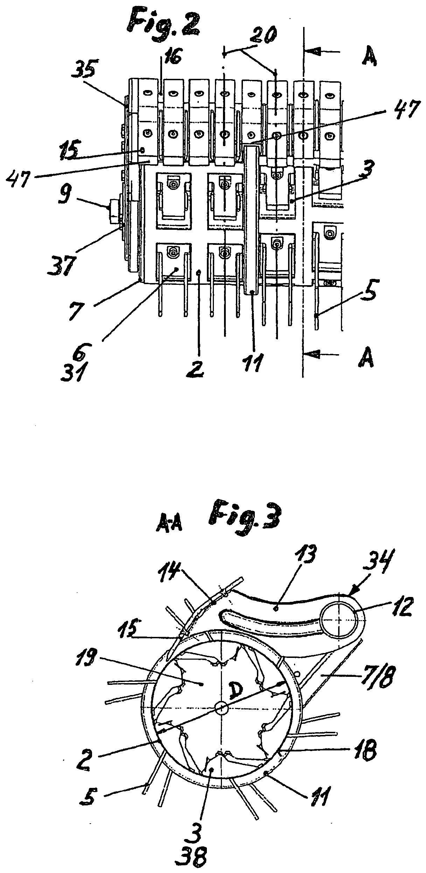

Die Figuren 2 und 3 zeigen die Aufnahmevorrichtung 1, die von einem Gestell 34, mit welchem sie mit der Erntemaschine verbunden ist, getragen wird. Das Gestell 34 besteht aus einer Quertraverse 12 an deren Enden Seitenwände 35 und 36, welche Lager 37 tragen, in denen die Trommel 2 mit ihrem Lagerzapfen 9 und mit ihrem Antriebszapfen 10 gelagert ist (vergl. Fig. 2). An der Quertraverse 12 sind Stege 13 angebracht, welchen Platten 14 tragen, auf denen Abstreifer 15 bzw. 17 angeordnet sind, deren Anordnung die Form eines Kammes ergibt. Die Abstreifer 17 sind an die Kontur der Bodenabstandshalter 11 angepasst. Sowohl die Abstreifer 15 als auch die Abstreifer 17 laufen in stummelartigen Endbereichen 47 aus und reichen bis unmittelbar an die Mantelfläche 18 der Trommel 2 heran. Zwischen Endbereich 47 und Mantelfläche 18 kann ein geringfügiger Spalt zur Reduktion von Reibung und Verschleiß vorgesehen sein.

Zwischen den Stegen 13 befinden sich Zwischenräumen 16, in die bei Rotation der Trommel 2 die Schenkel 5 der Aufnahmezinken 4 bzw. 30 einlaufen und untertauchen. Dort, wo ein Bodenabstandshalter 11 die Trommel 2 umläuft, ist der Abstreifer 17 an dessen Form angepasst.

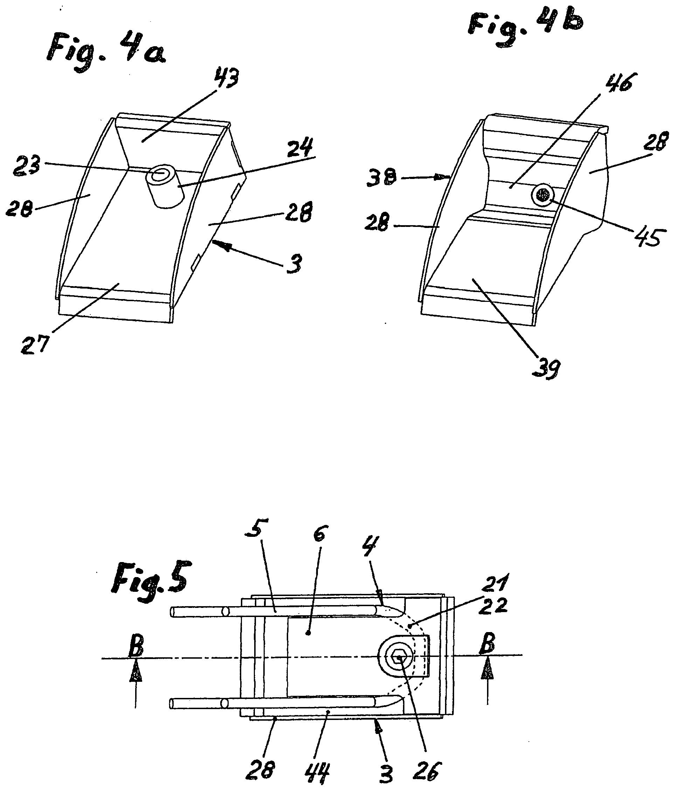

Die Figuren 4a und 4b zeigen Taschen 3 und 38 in unterschiedlichen Ausführungsformen.

Fig. 4a zeigt eine Tasche 3, umfassend einen Boden 27, Seitenstege 28 und eine Stirnplatte 43. Auf einem Boden 27 der Tasche 3 ist eine Buchse als Distanzstück 24 angeordnet. Eine Bohrung 23 koinzidiert mit einer Bohrung 45 im Boden 27.

Fig. 4b zeigt eine Aufnahmetasche 38, umfassend ebenfalls Seitenstege 28 und einen speziellen Boden 39, bei dem eine Teilfläche 46 so ausgerichtet ist, dass sie senkrecht zur Achsrichtung der Federschenkel 5 angeordnet ist. Grundsätzlich kann die Teilfläche 46 allerdings auch in einem anderen Winkel als senkrecht zur Achsrichtung der Federschenkel 5 angeordnet sein. In die Teilfläche 46 ist wiederum eine Bohrung 45 eingebracht, mit der der Aufnahmezinken 30 an der Aufnahmetasche 38 befestigt werden können. Im Ergebnis ist damit nach Montage des Aufnahmezinkens im unbelasteten Zustand die Achse einer Befestigungsschraube 40 parallel zur Achse der Federschenkel angeordnet.

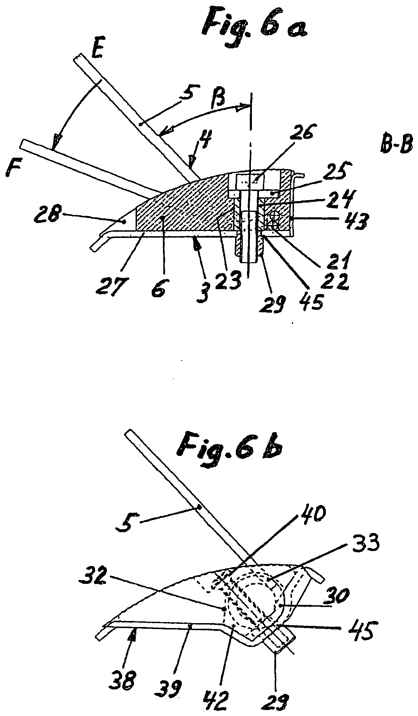

Die Figuren 6a und 6b zeigen die unterschiedlichen Taschen 3 und 38 jeweils als Baugruppe, umfassend jeweils die Schraube 26 bzw. 40, einen Aufnahmezinken 4 mit einem Schenkel 5 und eine Gewindemutter 29. Im Boden 27 ist eine Bohrung 45 so eingebracht ist, dass die Achsrichtung einer Schraube 26, mit der der Aufnahmezinken 4 an der Aufnahmetasche 3 befestigt wird, zur Achsrichtung der Schenkelfedern 5 einen Winkel β einschließt (vergl. Fig. 6a).

An der Tasche 3 ist eine Gewindemutter 29 angeordnet, die mit einer im Boden 27 der Tasche 3 angebrachten Bohrung 45 koinzidiert. Alternativ zu einer vorzugsweise fest angeschweißten Gewindemutter 29 kann auch die Bohrung 45 selbst mit einem Gewinde versehen sein. Das in die Tasche 3 eingesetzte Formstück 6 besitzt eine Nut 22, welche den Steg 21 des Aufnahmezinkens 4 aufnimmt. Weiterhin umfasst das Formstück 6 seitlich angeordnete Spalte 44 zur Aufnahme der bei der Futteraufnahme federnden Schenkel 5.

Zur Befestigung des Formstücks 6, welches aus elastischem Material besteht, ist im Formstück 6 eine Bohrung 23 vorgesehen, in die ein Distanzstück 24 eingesetzt ist, dessen Länge zur Erzielung einer Klemmwirkung auf die Formplatte 6, kürzer ist als die Dicke des Materials im Bereich der Bohrung 23. Über die Druckplatte 25 wird, mittels der Schraube 26, das Formstück 6 festgeklemmt. Die Nut 22 nimmt den Steg 21 auf. Wird der Aufnahmezinken 4 bei der Futteraufnahme belastet, weicht er aus einer Position E in Richtung einer Position F aus.

Die federnde Wirkung des aus Federstahl bestehenden Aufnahmezinkens 4 wird hierbei durch die Elastizität des Formstücks 6 unterstützt, welches ermöglicht, dass bei Belastung, durch die Anhebung des Steges 21 in der Nut 22 die Federwirkung des elastischen Materials ausgenutzt wird.

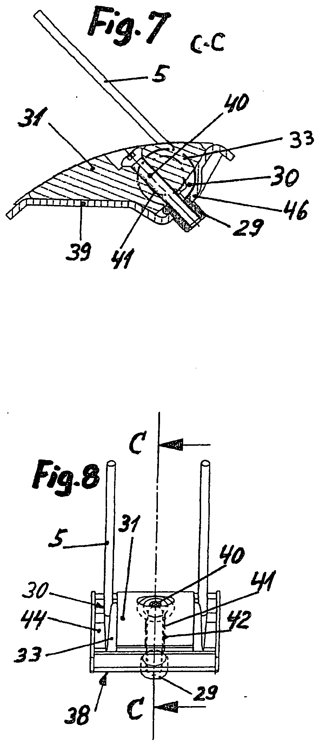

Die Figuren 7 und 8 zeigen eine alternative Ausführung, bei der an Stelle der in den Fig. 5 und 6 vorgesehenen Aufnahmezinkens 4 mit Steg 21 an sich bekannte Aufnahmezinken 30 mit spiralförmigem Windungsbereich eingesetzt sind. Hierzu ist der Aufnahmezinken 30 als Doppelschenkelfeder mit Schenkeln 5 und einer die Schenkel 5 verbindenden spiralförmigen Windungen 33 ausgeführt. Die zugehörige Tasche 38 besitzt einen Boden 39, der den Windungen 33 angepasst ist und mit einer unter dem Boden 39 fest angeordneten Gewindemutter 29 versehen ist. Weiterhin ist ein Formstück 31 vorgesehen, welches aus starrem Material, z.B. Metall oder aus elastischem Kunststoff bestehen kann. Es besitzt eine Aussparung 32 zur Aufnahme der Windungen 33 und seitliche Spalte 44 zur Aufnahme der unter Belastung ausweichenden Schenkel 5, wobei mittels einer, mit der Gewindemutter 29 verbundenen Schraube 40, die in der Bohrung 41 des Steges 42, der die Aussparung 32 mittig unterteilt, angeordnet ist, das Formstück 31 befestigt.

**Bezugszeichenliste**

| | | | |
|---|---|---|---|
| 1 | Aufnahmevorrichtung | 41 | Bohrung |
| 2 | Trommel | 42 | Steg |
| 3 | Taschen | 43 | Stirnplatte |
| 4 | Aufnahmezinken | 44 | Spalte |
| 5 | Schenkel | 45 | Bohrung |
| 6 | Formstück | 46 | Teilfläche |
| 7 | Stirnseite | 47 | Endbereich (der Abstreifer) |
| 8 | Stirnseite | | |
| 9 | Lagerzapfen | A-A | Schnitt |
| 10 | Antriebszapfen | B-B | Schnitt |
| 11 | Bodenabstandshalter | C-C | Schnitt |
| 12 | Quertraverse | D | Durchmesser |
| 13 | Steg | E | Position |
| 14 | Platte | F | Position |
| 15 | Abstreifer | β | Winkel |
| 16 | Zwischenraum | | |
| 17 | Abstreifer | | |
| 18 | Mantelfläche | | |
| 19 | Innenraum | | |
| 20 | Umlaufbahn | | |
| 21 | Steg | | |
| 22 | Nut | | |
| 23 | Bohrung | | |
| 24 | Distanzstück | | |
| 25 | Druckplatte | | |
| 26 | Schraube | | |
| 27 | Boden | | |
| 28 | Seitensteg | | |
| 29 | Gewindemutter | | |
| 30 | Aufnahmezinken | | |
| 31 | Formstück | | |
| 32 | Aussparung | | |
| 33 | Windung | | |
| 34 | Gestell | | |
| 35 | Seitenwand | | |
| 36 | Seitenwand | | |
| 37 | Lager | | |
| 38 | Tasche | | |
| 39 | Boden | | |
| 40 | Schraube | | |

## Patentansprüche

1. Aufnahmevorrichtung für eine Erntemaschine die mit einer quer zur Aufnahmerichtung angeordneten, während der Futteraufnahme rotierenden Trommel (2) ausgestattet ist, welche in Vertiefungen ihrer Mantelfläche (18) mit mehreren Reihen nicht steuerbarer Aufnahmezinken (4), die mit Schenkeln (5) versehen sind, besetzt ist und die mit einem kammartigem Abstreifer zum Abheben des Erntegutes von der Trommel ausgestattet ist und eingerichtet ist, am Boden liegendes Erntegut aufzunehmen um es einer nachgeordneten Vorrichtung, z.B. der Pressvorrichtung eines Ladewagens, zu übergeben und wobei die Mantelfläche (18) der Trommel (2) mit Taschen (3; 38) bestückt ist, die in den Innenraum (19) der Trommel (2) eingelassen und zu diesem staubdicht verschlossen sind, **dadurch gekennzeichnet, dass** jeweils eine Tasche (3; 38) jeweils einen Aufnahmezinken (4) aufnimmt.

2. Aufnahmevorrichtung nach Anspruch 1, **dadurch gekennzeichnet, dass** die Taschen (3; 38) in mehreren Reihen geradlinig angeordnet sind.

3. Aufnahmevorrichtung nach Anspruch 1, **dadurch gekennzeichnet, dass** die Taschen (3; 38) in mehreren spiralförmigen Reihen in der Mantelfläche (18) angeordnet sind.

4. Aufnahmevorrichtung nach einem der Ansprüchen 1 bis 3, **dadurch gekennzeichnet, dass** der Abstreifer (15; 17) stummelartige Endbereiche (47) umfasst, welche an die Mantelfläche (18) der Trommel (2) heranreichen.

5. Aufnahmevorrichtung nach einem der Ansprüchen 1 bis 4, **dadurch gekennzeichnet, dass** die Aufnahmezinken (4) von außen montierbar bzw. demontierbar sind.

6. Aufnahmevorrichtung nach einem der Ansprüchen 1 bis 5, **dadurch gekennzeichnet, dass** die Trommel (2) eine allseits geschlossene, staubund schmutzdichte Einheit bildet.

7. Aufnahmevorrichtung nach einem der Ansprüchen 1 bis 6, **dadurch gekennzeichnet, dass** zwischen den Umlaufbahnen (20) der Taschen (2 3; 38) mindestens ein ringförmiger Bodenabstandshalter (11) die Trommel (2) umschlingt.

8. Aufnahmevorrichtung nach einem der Ansprüchen 1 bis 7, **dadurch gekennzeichnet, dass** nur die Schenkel (5) der Aufnahmezinken (4) über den äußeren Durchmesser (D) der Trommel (2) hervorragen.

9. Aufnahmevorrichtung nach einem der Ansprüchen 1 bis 8, **dadurch gekennzeichnet, dass** die in den Taschen (2) angeordneten, die Aufnahmezinken (4) befestigenden Bauteile, die Taschen weitgehendst ausfüllen und mit dem Durchmesser (D) der Trommel (2) eine Umfangslinie bilden.

10. Aufnahmevorrichtung nach einem der vorhergehenden Ansprüche, **dadurch gekennzeichnet, dass** es sich bei den die Aufnahmezinken (4) befestigenden Bauteilen um Formstücke (6; 31) handelt.

11. Aufnahmevorrichtung nach einem der Ansprüchen 1 bis 10, **dadurch gekennzeichnet, dass** die Tasche (3; 38) einen Aufnahmezinken (4; 30) aufnimmt, der als Doppelschenkelspiralfeder ausgeführt ist.

## Claims

1. Gathering device for a harvesting machine which is equipped with a drum (2) that is arranged transversely to the gathering direction and rotates during the gathering of forage, said drum (2) being fitted, in recesses in its lateral surface (18), with several rows of non-controllable gathering tines (4) which are provided with legs (5), and being equipped with a comb-like stripper for taking the harvested material off the drum and being set up to gather harvested material lying on the ground in order to transfer it to a downstream device, for example the pressing device of a forage wagon, wherein the lateral surface (18) of the drum (2) is equipped with pockets (3; 38) which are let into the interior (19) of the drum (2) and are closed off therefrom in a dust-tight manner, **characterized in that** in each case one pocket (3; 38) accommodates in each case one gathering tine (4).

2. Gathering device according to Claim 1, **characterized in that** the pockets (3; 38) are arranged in a rectilinear manner in several rows.

3. Gathering device according to Claim 1, **characterized in that** the pockets (3; 38) are arranged in several spiral rows in the lateral surface (18).

4. Gathering device according to one of Claims 1 to 3, **characterized in that** the stripper (15; 17) comprises stub-like end regions (47) which reach as far as the lateral surface (18) of the drum (2).

5. Gathering device according to one of Claims 1 to 4, **characterized in that** the gathering tines (4) are fittable and removable from the outside.

6. Gathering device according to one of Claims 1 to 5, **characterized in that** the drum (2) comprises a dust-tight and dirt-tight unit that is closed on all sides.

7. Gathering device according to one of Claims 1 to 6, **characterized in that** at least one annular ground spacer (11) wraps around the drum (2) between the paths (20) of the pockets (2 3; 38).

8. Gathering device according to one of Claims 1 to 7, **characterized in that** only the legs (5) of the gathering tines (4) project beyond the outside diameter (D) of the drum (2).

9. Gathering device according to one of Claims 1 to 8, **characterized in that** the components that are arranged in the pockets (2) and fasten the gathering tines (4) fill the pockets as far as possible and form a circumferential line with the diameter (D) of the drum (2).

10. Gathering device according to one of the preceding claims, **characterized in that** the components that fasten the gathering tines (4) are moulded bodies (6; 31).

11. Gathering device according to one of Claims 1 to 10, **characterized in that** the pocket (3; 38) accommodates a gathering tine (4; 30) which is embodied as a double-leg coil spring.

## Revendications

1. Dispositif de ramassage pour une moissonneuse, qui est muni d'un tambour (2) disposé transversalement à la direction de ramassage, tournant pendant le ramassage de fourrage, lequel est doté, dans des renfoncements de sa surface d'enveloppe (18), de plusieurs rangées de dents de ramassage (4) non commandables qui sont pourvues de branches (5), et qui est muni d'un racloir en forme de peigne pour soulever la récolte du tambour et qui est prévu pour ramasser la récolte au sol afin de la transférer à un dispositif disposé derrière, par exemple le dispositif de presse d'une remorque de ramassage, et la surface d'enveloppe (18) du tambour (2) étant dotée de poches (3 ; 38) qui sont pratiquées dans l'espace intérieur (19) du tambour (2) et qui sont formées de manière étanche à la poussière par rapport à celui-ci, **caractérisé en ce qu'**une poche (3 ; 38) reçoit à chaque fois une dent de ramassage (4).

2. Dispositif de ramassage selon la revendication 1, **caractérisé en ce que** les poches (3 ; 38) sont disposées en ligne droite en plusieurs rangées.

3. Dispositif de ramassage selon la revendication 1, **caractérisé en ce que** les poches (3 ; 38) sont disposées dans la surface d'enveloppe (18) en plusieurs rangées en forme de spirale.

4. Dispositif de ramassage selon l'une quelconque des revendications 1 à 3, **caractérisé en ce que** le racloir (15 ; 17) comprend des régions d'extrémité en forme d'embouts (47) qui s'approchent de la surface d'enveloppe (18) du tambour (2).

5. Dispositif de ramassage selon l'une quelconque des revendications 1 à 4, **caractérisé en ce que** les dents de ramassage (4) peuvent être montées ou démontées de l'extérieur.

6. Dispositif de ramassage selon l'une quelconque des revendications 1 à 5, **caractérisé en ce que** le tambour (2) forme une unité fermée de tous les côtés, étanche à la poussière et à la saleté.

7. Dispositif de ramassage selon l'une quelconque des revendications 1 à 6, **caractérisé en ce qu'**entre les trajectoires périphériques (20) des poches (2 3 ; 38), au moins un élément d'espacement par rapport au sol, de forme annulaire (11), enveloppe le tambour (2).

8. Dispositif de ramassage selon l'une quelconque des revendications 1 à 7, **caractérisé en ce que** seulement les branches (5) des dents de ramassage (4) dépassent au-delà du diamètre extérieur (D) du tambour (2).

9. Dispositif de ramassage selon l'une quelconque des revendications 1 à 8, **caractérisé en ce que** les composants disposés dans les poches (2), fixant les dents de ramassage (4), remplissent presque complètement les poches et forment avec le diamètre (D) du tambour (2) une ligne périphérique.

10. Dispositif de ramassage selon l'une quelconque des revendications précédentes, **caractérisé en ce que** les composants fixant les dents de ramassage (4) sont des pièces moulées (6 ; 31).

11. Dispositif de ramassage selon l'une quelconque des revendications 1 à 10, **caractérisé en ce que** la poche (3 ; 38) reçoit une dent de ramassage (4 ; 30) qui est réalisée en tant que ressort spiral à double branche.
